# EUROPEAN PATENT SPECIFICATION

(11) **EP 1 549 577 B1**
(45) Date of publication and mention of the grant of the patent: **29.08.2007**
(21) Application number: 03792915.5
(22) Date of filing: 16.07.2003
(51) Int. Cl.: B65G 47/48, G06F 19/00

(54) **AUTOMATED PRODUCTION SYSTEM FOR OBJECT IDENTIFICATION, SELECTION AND TRANSPORT**
AUTOMATISIERTES PRODUKTIONSSYSTEM ZUR OBJEKTIDENTIFIKATION, AUSWAHL UND TRANSPORT
SYSTÈME DE PRODUCTION AUTOMATISÉ POUR UNE IDENTIFICATION, UNE SÉLECTION ET UN TRANSPORT D'OBJET

(30) Priority: 26.08.2002 US 405701 P
(43) Date of publication of application: 06.07.2005
(73) Proprietor: ABB AB, 721 83 Västerås (SE)
(72) Inventor: KNOBEL, Henrik, 187 32 Täby (SE); WARVELIN ERLANDSSON, Mats, 741 91 Knivsta (SE)
(86) International application number: PCT/SE2003/001221
(87) International publication number: WO 2004/018332

(56) References cited:
- JP-A- 62 218 314
- US-A- 5 379 229

## Description

### TECHNICAL FIELD

The present invention relates to a production system including an industrial robot and a detecton system for localization of objects. More precisely the invention relates to a method and system including an industrial robot and a vision system for extracting an object out of a plurality of objects in a continuous production flow. With objects in this context should be understood both objects which are identical as well as object or groups of objects that are different in shape, color softness and such. The objects arrive into the robot working range in a continuous stream on a conveyor, a rotating plate or the like, or they arrive in layers of a pallet.

### BACKGROUND OF THE INVENTION

It is known a system for sorting articles on a conveyor belt where the articles passes a detection area before entering a robot operation area. In the detection area the articles are identified by order of sort, position and orientation. This information is stored in a memory of the robot operating system. By this information the articles are picked, lifted and oriented by the robot and placed at a specified position in a reception area. A typical application of this system is picketing of chocolate pralines or cookies.

When working with heavier articles the picking process decreases due to acceleration forces. The risk of dropping the article also increases. When working with articles, which have an uneven or rough surface the technique of lifting with vacuum gripper become more difficult. A mechanical gripper is havier, more complcated and more expensive. A mechanical gripper is also less flexible.

From US 6,401936 a divert apparatus for a conveyor system is previously known. This is a sorting system for processing a disordered stream of items including three-dimensional non-flat articles. The apparatus regulates the flow of articles through the system by singulating a disordered stream. There is also means for mechanically increasing the spacing between the items and a gate for discharging articles from the stream. The known system is designed for one type of articles only. When changing production the apparatus has to be re-adjusted.

Thus there is a need in the industry for flexible handling arbitrary articles in a continuous production flow.

### SUMMARY OF THE INVENTION

A primary object of the present invention is to devise ways to find a solution to select an object from a plurality of objects present in an operation area for transport to a predefined position. A secondary object of the invention is to select an object in a flow of continuous products for transport in a direction at an angle to the direction of product flow.

This object is achieved according to the invention according to the features in the characterizing part of the independent claim 1 and according to a method as claimed in the independent claim 2. Preferred embodiments are described in the dependent claims.

In a first aspect of the invention these objects are achieved by a system for selection and transport of an object out of a plurality of objects in an operation area comprising a system for detection of objects present in the operation area and an industrial robot including a manipulator and an operating system having a computer memory for storing information on the objects present in the operation area, wherein the operating system comprises means for defining a transport direction of each object in the operation area, means for defining a passageway along the transport direction of each of said object, and means for calculating the presence of other objects penetrating into each of said passageways.

According to the invention an algorithms is described for a selection of objects in a continuous production flow according to given sorting rules. A continuous production flow, which feeds objects into a robot working area is defined by the positive flow direction, hereafter named "X" and it's perpendicular direction in the horizontal plane of a right-hand coordinate system, named "Y".

All objects information, such as position, orientation, type and size, are stored in a buffer in an industrial robot controller. A new object is requested from the buffer when the robot is about to use the object as a target. The robot operation can only be performed when the object is within an entry and an exit limit of the X-direction. The robot controller supervises this. Within this work area it shall be possible to choose the object with respect to the priority rules in X- and Y- or/and Z-direction.

Preferred information for sorting:
- **Sort direction:**
   From which direction the sorting will be done. Given in object request command.
- **Safety distance:**
   The clearance area for sorting. Given in object request command.
- **Enter limit**:
   The limit where the robot can start operate on an object. Given when defining a new object buffer.
- **Exit limit**:
   The limit where the robot can't operate on an object. The objects will be erased from the buffer when they enter this limit. Given when defining a-new object buffer.
- **Check limit**:
   Optional limit where the robot can't operate on the object. The objects will not be erased from the buffer when they enter this. Given in object request command.

The sorting algorithm chooses the object, which is the closest to the exit limit in X-direction and depending on the non-presence of other objects in direction of the sorting, the first object in the sort direction will be selected. A safety distance defines the required clearance area around an object. The algorithm will check both upwards and downwards the production flow for presence of other objects.

When a new object is requested from the object buffer, the sort direction and safety distance is given as parameters in the request command. The sorting algorithm will then choose which object the robot shall operate with.

By using a check limit, in the X-direction, as a parameter to the request command, it is possible to define the starting point from where the first object shall be extracted. The command will try to extract the first object between the check- and enter limit. This will have the effect that the sorting algorithm also takes all objects between the check limit and the exit limit into consideration when checking the safety distance for the nearest objects.

By this invention the objects can be extracted from the flow without touching surrounding objects. The objects can be shuffled sideways without any risk of bumping into other objects in the production flow.

It is possible to combine the directional sorting with type request. The first object of a certain type in the production flow will then be selected according to previous described algorithm.

Normally the production flow is in the horizontal plane. However there is no limitation to what direction the production flows. As an example the production flow can be vertical. This situation arises when the products arrive into the operation area on a pallet where the articles are piled individually or in layers. The detection information is then achieved from package pattern or by having the pallet moved between the detecting area and the operation area.

In a second aspect of the invention these objects are achieved by a method of selecting an object out of a plurality of objects in an operation area for transport to a predetermined location comprising, detection of the objects present in the operation area, storing object and location information in a computer memory, selecting an object to be picked, wherein the selecting step comprises, defining a transport direction for each of the objects present in the operation area, defining a passageway along the transport direction of each of said objects, calculating for each passageway the presence of penetration of any other of said present objects, selecting an object which passageway is free from penetration.

The following problems are solved with this invention:
- Shuffling objects off a conveyor without touching surrounding objects.
- Optimize production cycle performance by choosing products with shortest displacements.
- Sorted 3D picking of objects in order of their vertical positions. This can be used for efficient palletizing and de-palletizing while preserving the layers without the need for predefined layer schemes.

### BRIEF DESCRIPTION OF THE DRAWINGS

Other features and advantages of the present invention will become more apparent to a person skilled in the art from the following detailed description in conjunction with the appended drawings in which:
FIG is an operation area with a plurality of objects for selection,

### DETAILED DESCRIPTION OF THE INVENTION

The operating area in the embodiment showed in the fig is defined by the edges of a conveyor belt, a check limit line and a entry line. The transport direction is in the embodiment shown perpendicular to the flow direction. Normally a flow of products for picking arrive into a detection area (not shown) before entering the operation area. In the detection area all information of the articles are defined. This information contain type of article, size, position, orientation and other desirable information. At a predetermined time calculated from the flow speed and the distance between the detection area and the operation area the articles arrive into the operation area.

During this time the system calculated the transport direction for each of the articles to a predetermined position when the articles have reached the operation area. Before reaching the operation area the system also determine a passageway for each of the articles, along which the article must be transported. The passageway can be seen as a tunnel. Prior to arrival into the operation area the system also determine if any of the other objects present penetrates these tunnels. Thus each of those articles which has a clear tunnel can be chosen. An optimation program, having information on the speed of the flow, the performance of the manipulator and other information then chooses the optimal article for transport.

In an embodiment of the invention the detection system is a vision system. By a camera or a plurality of cameras the position and orientation information is achieved for each article. All such information is stored in a computer memory. The vision system gets continuous information of the articles passing the detection area. Thus the same article may appear on a plurality of detection areas that are overlapping each other. This results in the operating area being adjusted and thus always contain actual information.

The information received in the detection area may be used to direct a plurality of manipulators along the conveyor line. In a vision system that detect the articles prior to arrival into the operation area it is essential that the articles remaining on the conveyor remains at the same position and in the same orientation. This means that when an article is picked up or shuffled sideways the remaining articles must not be moved or even torched. If one of the articles are moved in one robot station its position will not be recognized in the next station.

The invention is not be limited by the embodiments presented above. Thus the production flow can be circular, as when the articles are placed on a rotating plate. The conveyor can also be continuous, such that the articles are passing several times through the detection area. The predetermined target position can be on either side of the conveyor belt and there can be a plurality of target locations at the same operation area.

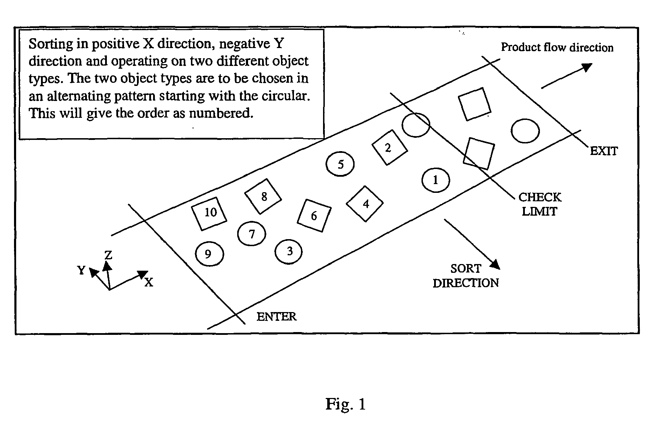

## Claims

1. System for selection and transport of an object out of a plurality of objects in an operation area comprising a system for detection of objects present in the operation area and an industrial robot including a manipulator and an operating system having a computer memory for storing information on the objects present in the operation area, **characterized in that** the operating system comprises means for defining a transport direction of each object in the operation area, means for defining a passageway along the transport direction of each of said object, and means for calculating the presence of other objects penetrating into each of said passageways.

2. Method of selecting an object out of a plurality of objects in an operation area for transport to a predetermined location comprising, detection of the objects present in the operation area, storing object and location information in a computer memory, selecting an object to be picked, **characterized in that** the selecting step comprises; defining a transport direction for each of the objects present in the operation area, defining a passageway along the transport direction of each of said objects, calculating for each passageway the presence of penetration of any other of said present objects, selecting an object which passageway is free from penetration.

## Patentansprüche

1. System zur Auswahl und zum Transport eines Objekts aus einer Vielzahl von Objekten in einem Arbeitsbereich, umfassend ein System zur Erfassung von Objekten, die in dem Arbeitsbereich vorhanden sind, und einen Industrieroboter, der einen Manipulator und ein Betriebssystem mit einem Computerspeicher zum Speichern von Informationen über die in dem Arbeitsbereich vorhandenen Objekte einschließt,
**dadurch gekennzeichnet, dass** das Betriebssystem Mittel zum Definieren einer Transportrichtung jedes Objekts in dem Arbeitsbereich, Mittel zum Definieren eines Durchgangswegs entlang der Transportrichtung von jedem der Objekte, und Mittel zum Berechnen des Vorhandenseins anderer Objekte, die in jeden der Durchgangswege eindringen, umfasst.

2. Verfahren zum Auswählen eines Objekts aus einer Vielzahl von Objekten in einem Arbeitsbereich zum Transport zu einem vorbestimmten Ort, umfassend eine Erfassung der Objekte, die in dem Arbeitsbereich vorhanden sind, Speichern von Objekt- und Orts-Informationen in einem Computerspeicher, Auswählen eines aufzunehmenden Objekts, **dadurch gekennzeichnet, dass** der Auswahlschritt umfasst:
Definieren einer Transportrichtung für jedes der in dem Arbeitsbereich vorhandenen Objekte, Definieren eines Durchgangswegs entlang der Transportrichtung jedes Objekts, Berechnen des Vorhandenseins eines Eindringens irgendwelcher der vorhandenen Objekte für jeden Durchgangsweg, Auswählen eines Objekts, dessen Durchgangsweg frei von Eindringen ist.

## Revendications

1. Système de sélection et de transport d'un objet parmi une pluralité d'objets dans une zone de travail, comprenant un système pour détecter des objets présents dans la zone de travail, un robot industriel doté d'un manipulateur et un système de commande avec une mémoire informatique pour enregistrer des informations concernant les objets présents dans la zone de travail, **caractérisé en ce que** le système de commande comprend un moyen pour définir une direction de transport de chaque objet dans la zone de travail, un moyen pour définir un passage suivant la direction de transport de chacun desdits objets et un moyen pour calculer la présence d'autres objets pénétrant dans chacun desdits passages.

2. Procédé de sélection d'un objet parmi une pluralité d'objets dans une zone de travail, en vue de son transport à un emplacement prédéterminé, comprenant la détection des objets présents dans la zone de travail, l'enregistrement des informations d'objet et d'emplacement dans une mémoire informatique et la sélection d'un objet à prélever, **caractérisé en ce que** l'étape de sélection englobe la définition d'une direction de transport pour chacun des objets présents dans la zone de travail, la définition d'un passage suivant la direction de transport de chacun desdits objets, le calcul, pour chaque passage, de la présence de l'un des autres objets pénétrant dans le passage, et la sélection d'un objet dont le passage est exempt de pénétration.
